(19) **Europäisches Patentamt**
**European Patent Office**
**Office européen des brevets**

(11) **EP 4 100 796 B1**

(12) **EUROPEAN PATENT SPECIFICATION**

(45) Date of publication and mention
of the grant of the patent:
**06.08.2025   Bulletin 2025/32**

(21) Application number: **21709561.1**

(22) Date of filing: **08.02.2021**

(51) International Patent Classification (IPC):
**G03H 1/04** *(2006.01)*      **G03H 1/06** *(2006.01)*
**G03H 1/00** *(2006.01)*

(52) Cooperative Patent Classification (CPC):
**G03H 1/041; G03H 1/0443; G03H 1/06;**
G03H 2001/005; G03H 2001/0447;
G03H 2001/0452; G03H 2222/24; G03H 2222/31;
G03H 2225/32; G03H 2227/03

(86) International application number:
**PCT/US2021/017102**

(87) International publication number:
**WO 2021/159084 (12.08.2021 Gazette 2021/32)**

(54) **LATTICE LIGHT-SHEET AND FRESNEL INCOHERENT CORRELATION HOLOGRAPHY**

GITTERLICHTBLATT UND FRESNEL-INKOHÄRENTES KORRELATIONSHOLOGRAMM

FEUILLE DE LUMIÈRE EN RÉSEAU ET HOLOGRAPHIE DE FRESNEL À CORRÉLATION
INCOHÉRENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.02.2020   US 202062971081 P**

(43) Date of publication of application:
**14.12.2022   Bulletin 2022/50**

(73) Proprietors:
• **THE BOARD OF TRUSTEES
  OF THE UNIVERSITY OF ILLINOIS
  Urbana, IL 61801 (US)**
• **THE ARIZONA BOARD OF REGENTS FOR AND
  ON BEHALF OF
  NORTHERN ARIZONA UNIVERSITY
  Tucson, AZ 85721 (US)**

(72) Inventors:
• **POTCOAVA, Mariana, Camelia
  Lakewood, CO 80228 (US)**
• **ALFORD, Simon, Trevor
  Chicago, IL 60614 (US)**
• **MANN, Christopher, John
  Flagstaff, AZ 86004 (US)**
• **ART, Jonathan, James
  Chicago, IL 60615 (US)**

(74) Representative: **Ipsilon Lyon
Le Contemporain
50 Chemin de la Bruyère
69574 Dardilly Cedex (FR)**

(56) References cited:
**WO-A1-2017/156425      US-A1- 2018 143 587**

**Description**

STATEMENT OF GOVERNMENT INTEREST

This invention was made with government support under grant number R21 DC017292 awarded by The National Institutes of Health (NIH). The government has certain rights in this invention.

TECHNICAL FIELD

The present disclosure relates to microscopy systems, and specifically to holographic optical microscopy.

BACKGROUND

Microscopy is a useful tool for imaging of a wide variety of samples, structural features, and objects that cannot be resolved by the unaided human eye. Different microscopy techniques are often employed for imaging of different targets. For example, fluorescent microscopy is often used to image biological samples and tissues, while scanning electron microscopy is often used to image nanoscale features and particles. Many microscopy techniques provide intense excitation radiation to the target to be imaged, which may compromise the function of biological tissues, cause photobleaching of samples, or otherwise degrade the structural integrity or electrical properties of the target. In some instances low intensity microscopy may be used to image sensitive samples and materials, but low intensity techniques require long image capture times, which are not feasible for imaging biological processes, fabrication processes (e.g., atomic layer deposition, or another fabrication to be monitored), or any changes of a sample in real time.

Light sheet microscopy is a high speed, low excitation intensity, 3D imaging technique. During light sheet microscopy, a plane of a material is illuminated using a sheet of light, and a microscope objective is configured to view the plane from an orthogonal direction as compared to the illumination. While light sheet microscopy provides advantages over other known microscopy techniques, excitation light sheets disperse rapidly in refractive tissue, which limits the penetration depth of a target or sample material. A reduced penetration depth is undesirable for many imaging applications including in live cell imaging in which the low excitation intensities of light sheets provide a major advantage, but in which the substrate can be strongly refractive. Further, a reduced penetration depth results in a loss of three-dimensional imaging information, which results in low contrast images of three-dimensional objects and the inability to resolve fine three-dimensional features. Further, if three-dimensional imaging is needed, additional mechanical components and optics may be required to obtain multiple images to generate an adequate three-dimensional image.

One light sheet microscopy approach, known as Lattice Light-Sheet Microscopy (LLSM), uses a convergent lattice of Bessel beams to generate the light sheet. In LLSM the excitation is confined to a plane defined by a lattice of intersecting Bessel beams that self-reinforce as they project through a target. A reflected beam is then viewed orthogonally as compared to the propagation of the excitation, allowing low excitation intensity illumination of planes to be viewed rapidly in sequence with little photobleaching or interacting with the target. The self-reinforcing nature of the Bessel beams increases the penetration depth as compared to other light sheet microscopy techniques. Nevertheless, LLSM is still limited to an imaging depth of approximately 100 $\mu$m in live tissue due to optical distortions. Attempts at improving the penetration depth have employed additional optics that has increased the penetration depth to around 200 $\mu$m. However, the required additions are technically challenging and require very expensive equipment. Further, imaging capabilities using LLS are limited when moving bulky detection objectives and not practical for many applications (e.g., biological and tissue imaging) because motors and translation stages have limited ranges of motion, and the target may not withstand the motion of the moving objective and optics. Additionally, the deeper penetration depths allow for dispersion and distortion of the lattice to compound with greater distortion due to the penetration of the target. While advances in microscopy techniques have allowed for the imaging of a wide-variety of targets, current methods still suffer from multiple drawbacks such as requiring complex optical setups, high intensity excitation radiation, long image acquisition times, and expensive equipment, among others.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one aspect, there is a method for performing holographic microscopy. The method includes providing, from a light sheet microscope to a modulator, radiation having a (i) phase, (ii) amplitude, and (iii) Poynting vector, modulating, by the modulator, the phase of the radiation to generate a plurality of beams, and detecting, at a detection plane of a detector module, the plurality of beams. The method further includes generating, by the detector module, a signal indicative of an interference pattern of the plurality of beams, and generating, by a processor, a holographic image from the signal indicative of the interference pattern.

In embodiments, the modulator is a spatial light modulator. In some embodiments, the radiation includes incoherent radiation. Further, in embodiments, the plurality of beams includes two beams have a phase offset of 0°, 90°, 180°, or 270° from each other. In embodiments, the method further includes collecting, by a microscope objective positioned at a first distance from the sample, the radiation from a sample and altering, by an actuator, the distance between the microscope objective and the sample from the first distance to a second distance, wherein the second distance is a different distance than the first distance; and collecting, by the microscope objective positioned at the second distance, the radiation from the sample.

In another aspect, there is a microscopy system including a light sheet microscope configured to provide radiation, the radiation having a (i) phase, (ii) amplitude, and (iii) Poynting vector, the Poynting vector having a direction indicative of a direction of propagation of the radiation. A modulator, disposed along the direction of the Poynting vector, is configured to modulate a phase of the radiation to generate a plurality of beams. A detector module, disposed along the direction of the Poynting vector, is configured to detect, at a detector plane of the detector module, the plurality of beams, and is further configured to generate a signal indicative of an interference pattern of the plurality of beams. A processor is communicatively coupled to the detector module, and is further configured to receive the signal indicative of the interference pattern, and to generate a holographic image from the signal.

BRIEF DESCRIPTION OF THE DRAWINGS

FIG. 1 is a schematic diagram of an embodiment of a holographic microscopy apparatus for performing incoherent holographic microscopy lattice light-sheet (IHLLS) imaging.

FIG. 2 is a flow diagram of a method for performing IHLLS imaging.

FIG. 3A is a schematic diagram of an optical layout for an IHLLS system illustrating the beam of a single diffractive lens configuration (IHLLS 1L).

FIG. 3B is a schematic diagram of an optical layout for an IHLLS system illustrating the first beam of a two-beam configuration, generated with two diffractive lenses, (IHLLS 2L).

FIG 3C is a schematic diagram of an optical layout for an IHLLS system illustrating the second beam of a two-beam configuration, generated with two diffractive lenses, (IHLLS 2L).

FIG. 4A is a lattice light sheet (LLS) image of a resolution target (USAF 1951), group 7, element 6, using white light.

FIG. 4B is an incoherent tomography LLS image, with one diffractive lens superimposed on a spatial light modulator (IHLLS 1L), of a resolution target (USAF 1951), group 7, element 6, using white light.

FIG. 4C is a plot of the normalized image intensity, along the dashed line, for group 7 of the resolution target according to the images of FIGS. 4A and 4B.

FIG. 4D is a plot of the normalized image intensity, along the dashed line, for group 7, element 6 of the resolution target according to the images of FIGS. 4A and 4B.

FIG. 5A is a tomographic image, obtained by a conventional LLS system, of 500 nm fluorescent beads.

FIG. 5B is a tomographic image, obtained by an IHLLS single lens system, of 500 nm fluorescent beads.

FIG. 5C is a tomographic image, obtained by a conventional LLS system, of 200 nm fluorescent beads.

FIG. 5D is a tomographic image, obtained by an IHLLS single lens system, of 200 nm fluorescent beads.

FIG. 6A is an array of holographic images, obtained by a two-lens IHLLS system, of 500 nm fluorescent beads.

FIG. 6B is an array of holographic images, obtained by a two-lens IHLLS system, of 200 nm fluorescent beads.

FIG. 7A is an image of maximum composite projection of all positions of a z-galvonometer for imaging of 500 nm fluorescent beads.

FIG. 7B is an image of maximum composite projection of all positions of a z-galvonometer for imaging of 200 nm fluorescent beads.

FIG. 8A presents the transverse full-width at half-maximum (FWHM) values for images obtained by the conventional LLS, IHLLS 1L, and IHLLS 2L systems for 500 nm fluorescent beads.

FIG. 8B presents the transverse full-width at half-maximum (FWHM) values for images obtained by the conventional LLS, IHLLS 1L, and IHLLS 2L systems for 200 nm fluorescent beads.

FIG. 9 is an array of images of a target neuron, with each image obtained by one of conventional LLS, single lens IHLLS, and two-lens IHLLS systems.

Advantages will become apparent to those skilled in the art from the following description of the preferred embodiments, which have been shown and described by way of illustration. Accordingly, the drawings and description are to be regarded as illustrative in nature and not as restrictive. The invention is solely defined by the appended claims.

DETAILED DESCRIPTION

An incoherent holographic microscopy detection method and associated system are disclosed. The microscopy technique employs incoherent holographic microscopy lattice light-sheet (IHLLS) imaging to generate three-dimensional images of a target. The method employs Fresnel incoherent correlation holography to generate the three-dimensional images. The incoherent imaging disclosed utilizes a scanning geometry with two imaging planes, reduces optical design and hardware complexity, and overall system cost as compared to other microscopy techniques. Further, the disclosed system and method allows for the generation of amplitude and phase three-dimensional images using numerical processing by digital holography.

Digital holography is a powerful three-dimensional (3D) imaging tool. In digital holography the 3D image of a sample volume is formed from determining and analyzing a complex-amplitude distribution of radiation. Most common digital holography techniques use coherent light, such as lasers, to illuminate a sample or target to image the target. The use of coherent light introduces noise from speckle and spurious interference, which limits the imaging resolution and contrast. Further, coherent light sources often provide high intensity excitation radiation which may damage, or otherwise be unsuitable, for imaging of certain materials (e.g., biological samples, tissues, electrically active materials, etc.). The incoherent holographic imaging described herein employs spatially incoherent light (e.g., fluorescent light, black body radiation, etc.) to form holograms and produce images with improved spatial resolution than conventional microscopy techniques.

The incoherent holography method and system disclosed utilizes a modified dual-lens Fresnel incoherent correlation holography technique to produce a complex hologram and to provide a reconstruction distance needed for the reconstruction of the hologram. As described herein, the IHLLS system exhibits a significant contrast improvement over other imaging techniques for imageing of beads and neuronal structures within a biological test sample, as well as quantitative phase imaging. The IHLLS also demonstrates improved transverse imaging resolutions as compared to traditional lattice light-sheet technique.

The disclosed system and method enable the generation of 3D holographic images without requiring the movement of any of a sample stage or detection microscope objective, which simplifies the system setup and reduces the need for mechanical components and controls. Further, by moving only galvanometric mirrors, the described system provides increased resolution and image accuracy as compared to known glass-optics LLS schemes. While not requiring the movement of system components, it may be desirable to perform a deeper volumetric reconstruction for a holographic image, and as such, the described IHLLS may include mechanical components. IHLLS allows for holographic volume reconstruction from fewer position displacements than other holography 3D imaging techniques reducing volume image acquisition time. For example, the described system may reconstruct a holographic image using 9 spatial positions of an objective, whereas traditional methods would require nearly 300 positions for the same objective. Capturing and reconstructing images at multiple objective positions may also improve axial resolution to achieve better localization of ample points and improve axial resolution of images. The optical and mechanical design of the described IHLLS system expands the applicability of lattice light-sheet systems and could open entirely new imaging modalities in all light sheet imaging instruments. The incoherent holography configuration described could be added as an accessory, or as an add-on feature, to any imaging system that uses Bessel or Gaussian beams for scanning and imaging.

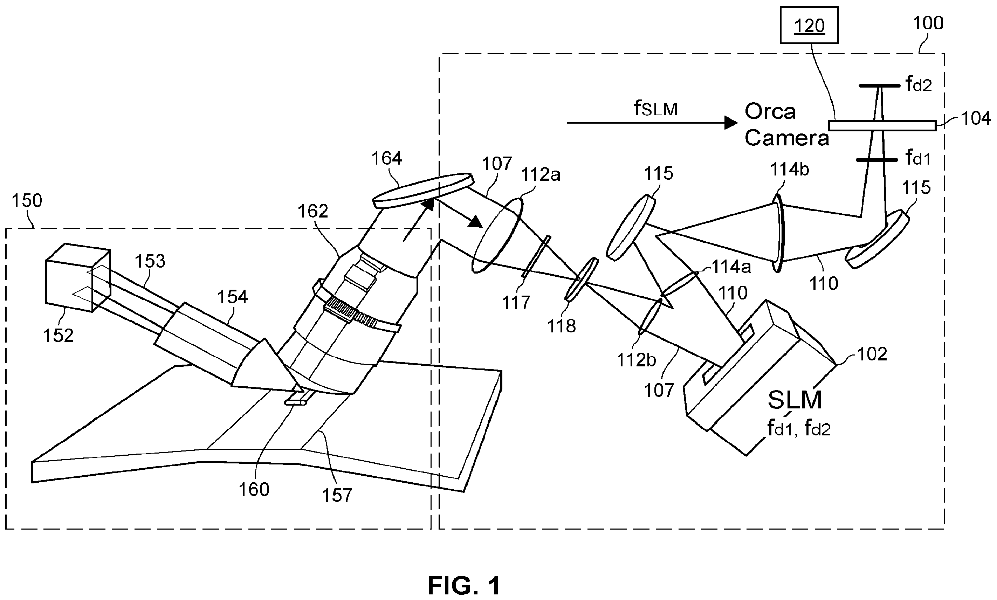

FIG. 1 is a schematic diagram of an embodiment of a holographic microscopy detection apparatus 100 for performing IHLLS as described herein. The holographic microscopy apparatus 100 includes a modulator 102 and a detector module 104. Radiation 107 is provided to the modulator 102 by a light sheet microscope, and the modulator 102 modulates the radiation 107 to generate a plurality of beams 110 from the radiation 107. The radiation 107 may be incoherent radiation that has a phase, amplitude, wavelength, and a Poynting vector indicative of the propagation direction of the radiation 107. In embodiments, the radiation 107 may be emitted continuous wave radiation or pulsed radiation before reaching the modulator, and the modulated plurality of beams 110 may be continuous or pulsed beams. The plurality of beams 110 is illustrated in FIG. 1 as a single beam for visual clarity, generated by two diffractive lenses superimposed on the modulator, referred to and further described herein as IHLLS 2L. In implementations, each beam of the plurality of beams may co-propagate along a direction of a same Poynting vector, or beams of the plurality of beams 110 may propagate along different Poynting vectors. The plurality of beams 110 may include two beams, three beams, four or more beams with at least two of the beams of the plurality of beams 110 being spatiotemporally overlapped. At least two of the beams of the plurality of beams 110 must be partially, or entirely, spatiotemporally overlapped to generate an interference pattern between the overlapped beams.

The detector 104 is disposed along a propagation direction of the plurality of beams 110 (e.g., along one or more Poynting vectors of a beam of the plurality of beams), with the detector 104 configured to detect the interference pattern of the overlapped beams. The detector 104 may include one or more of a CMOS detector, a charge-coupled device (CCD), one or more photodiodes or photodiode arrays, a photovoltaic detector, a photomultiplier tube, a metal-oxide-semiconductor (MOS) capacitor, or an infrared sensor. The detector 104 is configured to generate a signal indicative of the detected interference pattern, and to provide the generated signal to a processor 120 for performing hologram generation, hologram reconstruction in amplitude and phase, and image processing. Further, the processor 120 may be configured to perform any required processing, calculations, or functions described herein to generate a holographic image.

In embodiments, the holographic microscopy apparatus 100 may include additional optical elements for performing wavelength filtering, polarization filtering, reflection, magnification, lensing, beam splitting, amplitude modulation, phase modulation, or for performing another optical process. In the embodiment illustrated in FIG. 1, the holographic microscopy apparatus 100 includes a first lens 112a and a second lens 112b configured to operate together as a telescope to magnify, or demagnify, the radiation 107. It may be desirable to increase or decrease the size of a wavefront of the radiation 107 according to the size of the wavefront 107 as it enters the holographic microscopy apparatus 100, and/or according to a size of an active area of the modulator 102. The active area of the modulator 102 is an area of the modulator 102 that actively modulates the phase and/or amplitude of the radiation 102. To prevent loss of radiation 107 it may be desirable for the first and second lenses 112a and 112b to magnify the wavefront of the radiation 107 to a size that is equal to, or smaller than, the active area of the modulator 102. While the first and second lenses 112a and 112b are described herein as magnifying the radiation 107, other elements may be employed to magnify the radiation 107. For example, a mirror, spatial light modulator, telescope, objective, or other magnifying element may be used to magnify the radiation 107.

The holographic microscopy apparatus 100 may further include a third lens 114a and a fourth lens 114b configured to operate together as a telescope to magnify the plurality of beams 110. In embodiments, it may be desirable to increase or decrease the size of one or more beams of the plurality of beams 110 according to the size of a detection area of the detector module 104, and/or the size of the active area of the modulator 102. The detector module 104 may include one or more sensors that have defined detection areas for detecting one or more of the beams of the plurality of beams 110, and/or for detecting interference between beams of the plurality of beams 110. To prevent loss of radiation 107, it may be desirable to for the third and fourth lenses 114a and 114b to magnify one or more beams of the plurality of beams 110 to a transverse size that is equal to, or smaller than an overall detection area of the detector module 102 (i.e., the combined detection area of the one or more sensors of the detection module 104). While the third and fourth lenses 114a and 114b are described herein as magnifying the plurality of beams 110, other elements may be employed to magnify the plurality of beams 110. For example, a mirror, spatial light modulator, telescope, objective, or other magnifying element may be used to magnify the plurality of beams 110.

The holographic microscopy apparatus 100 may include a wavelength filter 117 disposed along a direction of the Poynting vector of the radiation 107 configured to filter out wavelengths of the radiation 107. In embodiments, the wavelength filter 117 may include one or more of a low-pass filter, high-pass filter, notch filter, bandpass filter, or another type of wavelength filter. The holographic microscopy apparatus 100 may further include a polarizer 118 disposed along a direction of the Poynting vector of the radiation 107 configured to filter out polarizations of the radiation 107. In embodiments, the polarizer 118 may include one or more polarizers configured to transmit, or filter out, horizontally polarized radiation, vertically polarized radiation, diagonally polarized radiation, circularly polarized radiation, elliptically polarized radiation, or a superposition of polarizations. The polarizer 118 may include a polarizer configured to transmit radiation having a polarization parallel to an active axis of the modulator 102. The wavelength filter 117 and the polarizer 118, may provide filtering and polarizing of the radiation to increase a signal-to-noise (SNR) ratio of the radiation 107, to further improve an SNR of the signal generated by the detector module 104. The apparatus 100 may further include mirrors 115 for directing the radiation 107 and the plurality of beams 110 throughout the apparatus 104 as required. Further, in embodiments, the holographic microscopy apparatus may include one or more spatial filters, amplitude modulators, phase modulators, mirrors, wavelength filters, beam splitters, diffractive elements, prisms, lenses, refractive elements, or other optical elements. In addition to modulating the radiation 107 to form the plurality of beams 110, the modulator 102 may additionally be configured to modulate the radiation 107 to correct for aberrations and distortions due to other optical elements of the apparatus 100. For example, the modulator 107 may provide phase corrections due to imperfections of lens surfaces, imperfections of mirror surfaces, index of refraction inconsistencies, debris, or another optical aberration. Additionally, the modulator 107 may be configured to provide a phase to the radiation 107 to correct for phase errors due to the modulator 102 itself.

The holographic microscopy apparatus 100 is configured to be an addition to, or add-on to, another imaging system. As illustrated in FIG. 1, the holographic microscopy apparatus 100 is, according to the invention, added onto an LLSM imaging system 150, with the LLSM imaging system 150 configured to provide the radiation to the holographic microscopy apparatus 100. The LLSM imaging system 150 includes a radiation source 152 that provides illumination radiation 153 to an illumination focusing element 154. The illumination focusing element 154 focuses the illumination radiation 153 onto a target 160, also refered to as a sample, to image the target 160. The target 160 is disposed on a lattice stage 157. The target 160 and the lattice stage 157 reflect the illumination radiation 153, and an objective 162 is physically configured to collect the reflected illumination radiation. The objective 162 magnifies the reflected radiation and directs the reflected radiation toward the holographic microscopy apparatus 100 as the radiation 107 provided to the holographic microscopy apparatus 100. In embodiments, additional, coupling optics may be employed to direct the radiation 107 from the objective 162 to the modulator 102 of the holographic microscopy apparatus 100, thereby optically coupling the imaging system 150 to the holographic microscopy apparatus 100. For example, as illustrated in FIG. 1, a mirror 164 may direct the radiation 107 from the objective 162 of the LLSM imaging system 150 to the holographic microscopy apparatus 100. Therefore, the LLSM system 150 is a source of the radiation 107 for the holographic microscopy apparatus 100. In embodiments, an actuator may be physically coupled to the objective 163 to control a position of the objective 162. The actuator may be configured to alter a distance between the objective 163 and the target 160. In embodiments, the actuator may be a galvanometer, translation stage, piezoelectric device, or another actuator. Further, in embodiments, an actuator may be physically coupled to the lattice stage 157 to alter the position of the lattice stage 157.

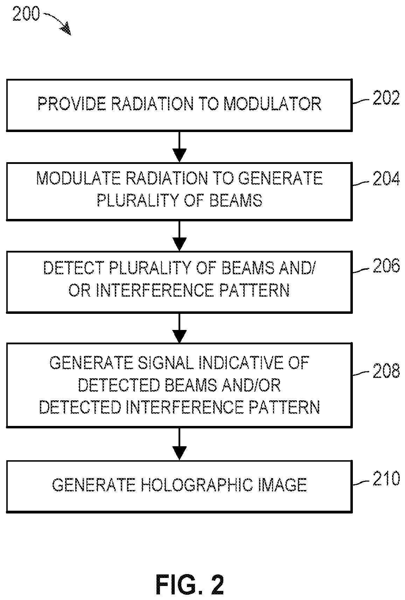

FIG. 2 is a flow diagram of a method 200 for performing IHLLS imaging as described herein. The method 200 of FIG. 2 is performed by the holographic microscopy apparatus 100 of FIG 1. Referring now simultaneously to FIGS. 1 and 2, the method 200 includes providing the radiation 107 to the modulator 102 (block 202). The modulator 102 is configured to modulate the radiation 107 according to modulation phase and amplitude profiles. The modulation phase and amplitude profiles are configured such that the modulator 102 modulates the radiation 107 to generate a plurality of beams 110 (block 204). In embodiments, the modulator 102 may include a spatial light modulator (SLM) configured to reflect and modulate the radiation 107 as the plurality of beams 110. In other embodiments, the modulator 102 may be a modulator that transmits the radiation 107 to form the plurality of beams 110.

The method 200 further includes detecting the plurality of beams 110 (block 206). The detector module 104 is configured to detect one or more of the plurality of beams, or to detect an interference pattern of two or more beams of the plurality of beams 110. The detector module 104 generates a signal indicative of the detected plurality of beams, and/or the detected interference pattern (block 208). The detector module 104 provides the signal to the processor 120 and the processor 120 generates a holographic image from the signal (block 210). The processor 120 may perform one or more machine executable instructions that cause the processor to perform one or more signal processing techniques, image processing techniques, optical analyses, transformations, or other processes for generating the holographic image. The generated holographic image may be presented to a user via a user interface, stored in a memory, provided to another storage device, provided to another system, and/.or further processed.

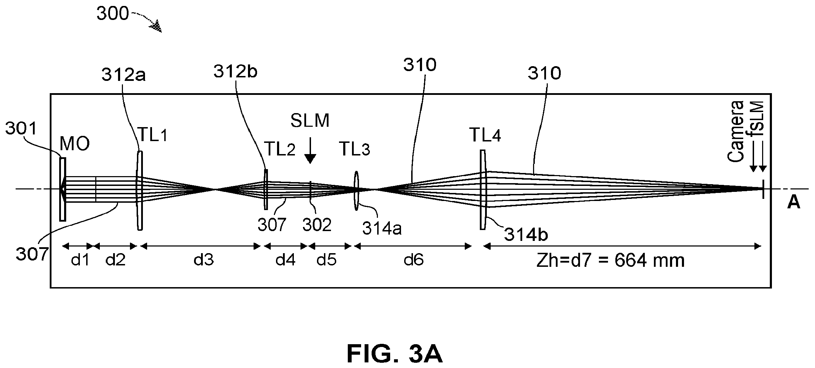

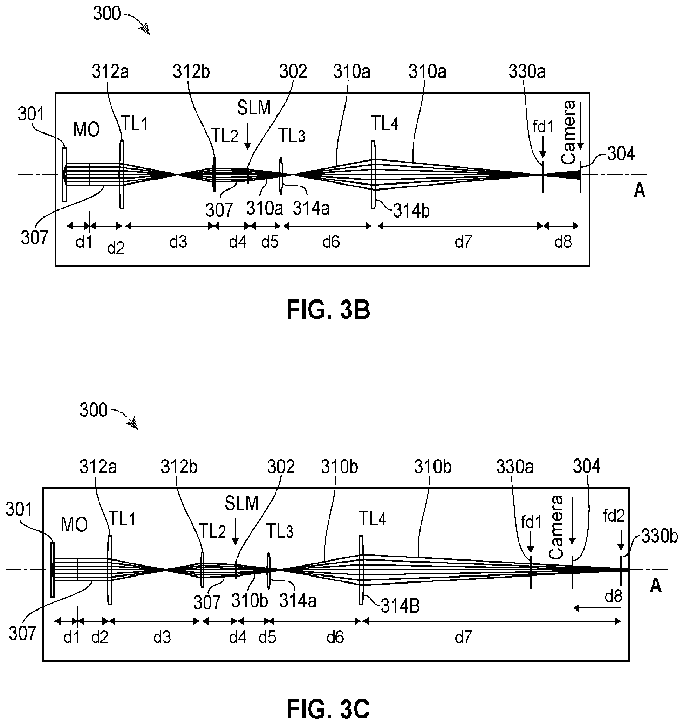

FIGS. 3A, 3B, and 3C are schematic diagrams of optical layouts for an IHLLS system 300. FIG. 3A is a schematic diagram of an IHLLS system having single diffractive lens configuration, while FIGS. 3B and 3C are schematic diagrams of an IHLLS system having two diffractive lenses. FIGS. 3A, 3B, and 3C include a source of radiation 301 providing radiation 307 along an optical axis A to a first lens 312a. In FIGS. 3A, 3B, and 3C, the radiation 307 has a Poynting vector with a direction parallel to the optical axis A. The first lens 312a focuses the radiation and a second lens 312b collimates the radiation. Together, the first and second lenses 312a and 312b perform as a telescope to magnify the radiation 307. A modulator 302 modulates the radiation 307 to generate a first beam 310a, illustrated in FIG. 3B, and a second beam 310b, illustrated in FIG. 3C, that co-propagate along the optical axis A. For the single diffractive lens configuration of FIG. 3A, the modulator 302 modulates the radiation 307 to form a single output beam 310. A third and fourth lens 314a and 314b perform together as a second telescope to further magnify and focus the first and second beams 310a and 310b. The first beam 310a is focused to a first focal plane 330a, and the second beam 310b is focused to a second focal plane 330b that is at a different location along the optical axis A than the first focal plane 330a. A detector 304 is disposed along the optical axis A to detect the first and second beams 310 a and 310b, and any interference thereof.

To provide maximum interference of the first and second beams 310a and 310b at the detector 304, it may be desirable for the first and second beams 310a and 310b to have as much transverse overlap as possible at the detector 304. For example, as shown in FIGS. 3A and 3B, the modulator 302 may modulate the radiation 307 such that the transverse size of the first beam 310a and second beam 310b are equal at the detector. Although, the first focal plane 330a of the first beam 310a is along the optical axis A a distance before the detector 304, and the second focal plane 330b of the second beam 310b is along the optical axis A a distance behind the detector 304. Therefore, while the first and second beams 310a and 310b may have a maximum amount of transverse overlap at the detector 304, there may be a phase difference between the first beam 310a and second beam 310b at the detector 304. The modulator 302 may be configured to focus the first and second beams 310a and 310b anywhere along the optical axis, and further, may modulate the first and second beams 310a and 310b to provide a desired phase offset between the first and second beams 310a and 310b.

FIGS. 3A, 3B, and 3C include distance parameters between the optical elements of the IHLLS system 300. FIG. 3A illustrates the schematics of an IHLLS with only one diffractive lens, referred to as IHLLS 1L, and FIGS. 3B, and 3C illustrate the schematics of an IHLLS with two diffractive lenses, referred to as IHLLS 2L. Distance $d_1$ is the distance between the source of radiation 301 and a microscope objective MO. The distance $d_2$ is the distance between the microscope objective and the first lens 312a. The distance $d_3$ is the distance between the first lens 312a and the second lens 312b, distance $d_4$ is the distance between the second lens 312b and the modulator 302, distance $d_5$ is the distance between the modulator 302 and the third lens 314a, distance $d_6$ is the distance between the third lens 314a and the fourth lens 314b, distance $d_7$ is the distance between the fourth lens 314b and the either the first focal plane 330a or the second focal plane 330b as illustrated by FIGS. 3B and 3C respectively, and distance $d_8$ is the distance between the detector 304 and the first and second focal planes 330a and 330b as illustrated in FIGS. 3B and 3C respectively.

To generate a holographic image as described in the IHLLS method and system described herein, a hologram must be obtained from the interference pattern of multiple beams at the detector 304. For example, using the illustrations of FIGS 3B and 3C, the radiation 307 may be one or more Bessel beams having positive spherical wavefronts. As such, the interference between the first and second beams 310a and 310b, which are focused to the first and second focal planes 330a and 330b, may be determined by the expression

$$U = \left[ C_1 Q\left(-\frac{1}{f_{d1}}\right) + C_2 \exp(i\theta)\, Q\left(-\frac{1}{f_{d2}}\right) \right], \qquad \text{EQ. 1}$$

where Q is the quadratic phase function

$$Q(b) = \exp[(i\pi\lambda^{-1}(x^2 + y^2)], \qquad \text{EQ. 2}$$

$\theta$ is the phase shift of the SLM, $f_{d1}$ is the focal length of a first diffractive lens, and $f_{d2}$ is the focal length of a second diffractive lens. The first and second diffractive lenses are superimposed on the modulator 302, and the first lens generates the first beam 310a and having a focus at the first focal plane 330a, and the second lens and $C_1 = C_2 = 0.5$ are constants. Therefore, employing the optical system and method of FIGS. 1 and 2, with EQS. 1 and 2, the interference of a plurality of beams at a detector may be determined, and a holographic image may be generated. It should be noted, that by setting either one of the superimposed lens focal lengths to infinity, either $f_{d1} = \infty$ or $f_{d2} = \infty$, EQ. 1 reduces to a single lens term weighted by either $C_1$ or $C_2$, effectively creating a single lens superimposed on the SLM. The single lens superimposed SLM will be described further herein in reference to single lens IHLLS imaging measurements.

To demonstrate the described IHLLS, a holographic apparatus according to the apparatus 100 of FIG. 1 was constructed. Similar to the illustration of FIG. 1, an LLS system, such as the LLS system 150 of FIG 1, provided the radiation 107 to the constructed apparatus. For clarity, references to FIGS. 1, 3A, 3B, and 3C will be used for the following examples of performing IHLLS imaging.

To demonstrate IHLLS imaging, an SLM was employed as the modulator 102 and the radiation 107 had a wavelength of 520 nm. The SLM was a phase SLM (Meadowlark; 1920 × 1152 pixels), that was recalibrated to phase shift the radiation 107 to form two beams as the plurality of beams 110. The SLM was configured to apply a full range of 0 to $2\pi$ phase shift over its working range of 256 gray levels.

The detector module 104 was a CMOS ORCA camera and various components of the apparatus 100 and the LLS 150 were controlled by a Labview platform (National Instruments). A custom diffraction method was developed using MATLAB (Mathworks, Inc.), and the complex hologram was propagated and reconstructed at a focal plane using the custom diffraction method.

Performance of the holographic microscopy apparatus 100 was compared to conventional LLS imaging by superimposing two different lens configurations onto the active surface of the SLM, (i) a single lens was superimposed on the SLM was to generate one beam from the radiation 107, and (ii) two diffractive lenses were superimposed on the SLM to generate two beams as the plurality of beams 110. The single lens configuration is referred to herein as IHLLS 1L, and the two diffractive lens configuration is referred to herein as IHLLS 2L.

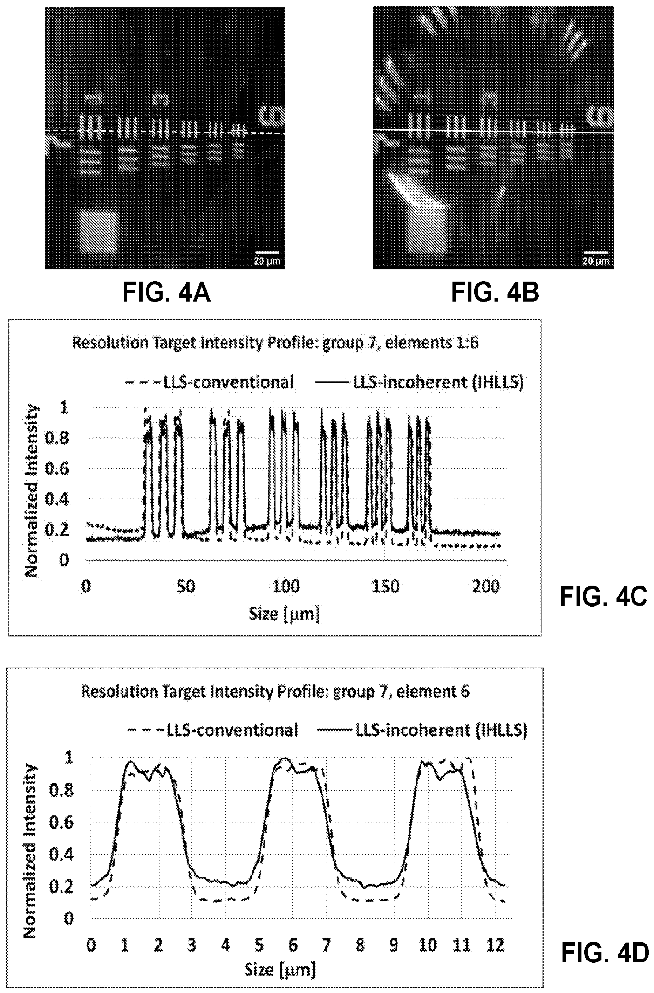

Optical simulations of IHLLS were performed in two steps. First, the distances between each sequential optical component and the focal length of $f_{SLM}$ of a diffractive lens superimposed on the SLM, were calculated to match the transversal pixel magnification of 62.5 for both conventional LLS and IHLLS 1L (FIG. 3A) configurations, using OpticsStudio (Zemax, LLC) optical design. It was determined that with the radiation 307 having an emission wavelength of 520 nm, and with an overall transversal magnification set to 62.5, the distances should be about , $d_1 = 75\ mm$, $d_2 = 95.074$ $mm$, $d_3 = 288.914\ mm$, $d_4 = 103.660\ mm$, $d_5 = 103.660\ mm$, $d_6 = 288.914\ mm$, the distance between the fourth lens 314b to the detector 304 should be about 664 mm (i.e., $d_7 = 664\ mm$), and the focal length of the single diffractive lens superimposed on the SLM was determined to be $f_{SLM} = 400\ mm$. For the first step, the transversal magnification was checked by imaging a USAF 1951 resolution target, group 7, element 6, with both conventional LLS and the IHLLS 1L setup using a white light source. FIG. 4A is a y-x LLS image of the resolution target, and FIG 4B is an x-y IHLLS 1L image of the resolution target. As evidenced by comparing the cross-sections, along the dashed lines, of group 7 of FIG. 4C, and element 6 of FIG. 4D, the IHLLS 1L provides the same magnification of 62.5 as the conventional LLS system. Additionally, an optimization of a multi-configuration optical system, as shown in FIGS. 3B and 3C, was performed to calculate the focal lengths of two diffractive lenses superimposed on a spatial light modulator to provide maximum overlap of the two beams at the plane of the detector 304 and keeping all of the distances $d_1 \div d_7$ fixed as determined in the above for the previous step. After performing the optimization, the values of the two focal lengths were found to be $f_{d1} = 220\ mm$ and $f_{d2} = 2356\ mm.$, which were used for the design of two diffractive lenses. The two lenses focus at a distance $d_7 = 555.185\ mm$ in the front of the camera, FIG. 3B, and at $d_7 = 826.793\ mm$ behind the camera, FIG. 3C, respectively. In implementation, the distance $d_7$ + $d_8$ may need to be tuned by $\pm 0.3$ depending on tolerances and imperfections of optical parameters of other elements of the system (e.g., tolerances of lenses, tolerances of phase resolution of the SLM, etc.). (i.e., $d_{7\_1} + d_8 = 664.298\ mm$, when calculating $f_{d1}$, and $d_7 + d_8 = 663.793\ mm$, when calculating $f_{d2}$. FIGS. 4C and 4D are plots of the normalized image intensity cross-sections for the group 7, and element 6 respectively, of the resolution target according to the images of FIGS. 4A and 4B. In both of the plots of FIGS. 4C and 4D there is a complete overlap of the intensities, which means a complete matching of the transversal magnification of the two modules, the LLS detection path and the IHLLS 1L detection path.

As previously discussed, to achieve high diffraction efficiency, and therefore high a contrast interference pattern at the detector 304, the first and second beams 310a and 310b formed by the SLM must overlap at a detection plane of the detector module 310. To determine the various distances between, and optical parameters of, the elements of the ILSSM system 300, the OpticsSetup optical design software was used. Keeping all the distances $d_1$ to $d_7$ constant, and superimposing two diffractive lenses onto the SLM, a multi-configuration optical system was determined having the transverse height of the two beams equal in size at the camera plane (e.g., at the detector 304). It was determined that, to provide a maximal overlap of the two beams at the detector 304, the first focal plane 330a should be at a focal distance of $f_{d1}$ = 220 mm from the SLM, and the second focal plane 330b should be at a focal distance of $f_{d2}$ = 2356 mm from the SLM. As previously mentioned, the various distances of the first and second focal planes 330a and 330b are approximate values, and in practice, they may be tuned by $\pm 0.5$ to $\pm 5$ mm, or more, depending on tolerances and imperfections of optical parameters of other elements of the system.

An IHLLS 2L imaging system was built according to the setups of FIGS. 1, 3B, and 3C using the optical element distances and focal distances determined by the simulations, and by superimposing two lenses on the SLM. The constructed IHLLS imaging system was used to image fluorescent latex beads that fluoresce at 500 nm and 200 nm ($\lambda_{esc}$=488 nm, $\lambda_{em}$ = 520 nm, L-5222, Molecular Probes, USA). The beads were placed in a solution having a concentration of 2% of the solid beads, and the solution was diluted to a ratio of 1:4000 with distilled water. The solution was centrifuged in a desktop centrifuge for 1 minute and clean coverslips were prepared by applying 1 $\mu$L of the solution as a thin layer that was left to dry. After drying, a cover slip was mounted in a sample holder of a conventional LLS system under distilled water. Three tests were performed to evaluate the performance of the IHLLS 2L imaging system. The first test was used a conventional LLS pathway having a z-galvanometer control the position of a microscope objective to collect images of multiple z-planes of the 500 nm flourescent beads. The z-galvanometer was stepped in increments of $\delta z_{LLS} = 0.2\ \mu m$ through the focal plane of a 25x Nikon objective which was simultaneously moved the same distance with a z-piezo controller for a displacement range of $\Delta z_{galvo} = 60\ \mu m$. The transverse scanning area of each image was $104 \times 104\ \mu m^2$ for the conventional LLS system. A second set of images of the 500 nm fluorescent beads was obtained using the IHLLS 1L with an SLM superimposed lens focal length of $f_{SLM}$ = 400 mm. Both the z-galvanometer and z-piezo were stepped by the same increment of $\delta z_{LLS} = 0.2\ \mu m$ through the focal plane of the objective for the same displacement $\Delta z_{galvo} = 60\ \mu m$ as in the conventional LLS measurements. The two measurements described above, using the conventional LLS and IHLLS 1L imaging systems, were repeated to image the 200 nm fluorescent beads.

The two measurements described above, using the conventional LLS and IHLLS 1L imaging systems, were repeated to image the 200 nm fluorescent beads. For both the conventional LLS and the IHLLS 1L systems, the 200 nm beads were imaged with a transverse scanning area of $208 \times 208\ \mu m^2$, a galvanometer displacement of $\Delta z_{galvo} = 80\ \mu m$, by increments of $\delta z_{LLS} = 0.16\ \mu m$. For conventional LLS, the scanning area is typically limited to about $54 \times 54\ \mu m^2$, with some operating up to $78 \times 78\ \mu m^2$. Therefore, multiple 54x54 $\mu m^2$ images were obtained in a mosaic-fashion by moving the sample, to form a single image at a given z-galvanometer position. This multiple image mosaicing requires substantially longer acquisition time and images registration for an LLS system than the disclosed IHLLS 1L, and the IHLLS 2L, systems.

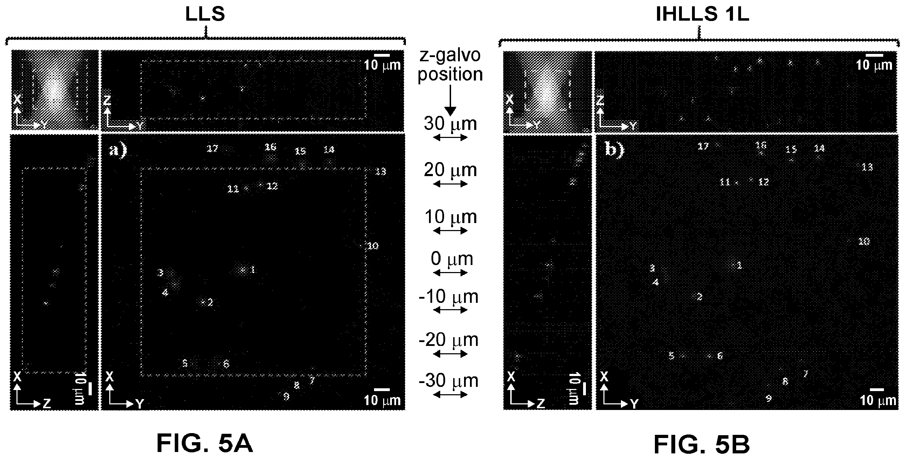

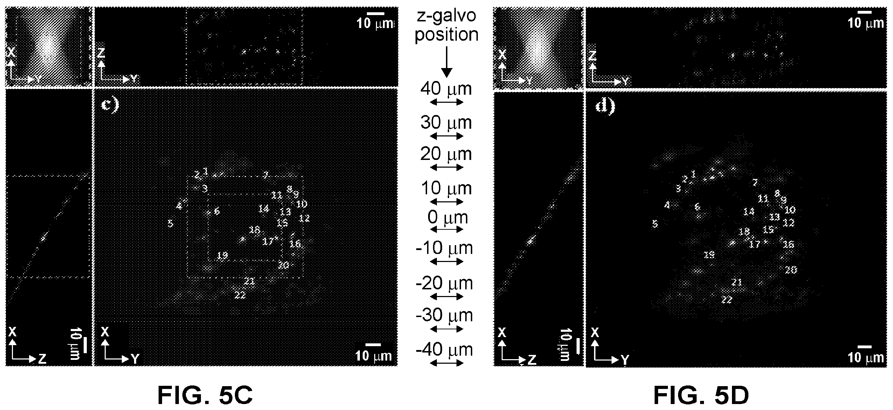

FIGS. 5A and 5B are tomographic images of the 500 nm fluorescent beads obtained by the conventional LLS system and the IHLLS 1L system, respectively. The images of FIGS. 5A and 5B were obtained using 300 steps of the z-galvonometer and have transverse scanning areas of 104 x 104 $\mu$m². FIGS. 5C and 5D are tomographic images of the 200 nm fluorescent beads obtained by the conventional LLS system and the IHLLS 1L system respectively. The images of FIGS. 5C and 5D were obtained using 500 steps of the z-galvonometer and have transverse scanning areas of 208x208 $\mu$m². The Bessel beam profiles used to obtain each of the images of FIGS. 5A though 5D are displayed in the upper left corners of FIGS. 5A through 5D respectively.

In the measurements of the fluorescent beads, the IHLLS 1L system has an increased transverse scanning area and shorter imaging times than conventional LLS. One reason for these improvements is the larger potential scanning area of the IHLLS 1L system as compared to the conventional LLS system. It was also determined from FIGS. 5A through 5D that the IHLLS 1L system exhibited a decrease in image resolution, in both lateral and axial directions, due to a blurring effect of the SLM due to the superimposed lens that has a focal distance of infinity, as previously described.

The IHLLS 2L system was also used to image the 500 nm and 200 nm fluorescent beads. The measurements performed by the IHLLS 2L system also translated the z-gavlonometer according to the total galvanometer translation, and displacement intervals as was used for the conventional LLS and IHLLS 1L measurements. The two beam wavefronts interfered at the detector 304 and created Fresnel holograms captured by the detector 304. The modulator 302 was configured to provide multiple sets of beams with each set having two beams with a different phase offset. Each set of two beams was generated by the modulator 302 at a different time than other sets of beams to generate a time-series of four different sets of beam pairs. Each set of beam pairs had a phase offset of either 0°, 90°, 180°, or 270° (i.e., phases of 0, $\pi/2$, $\pi$, and $3\pi2$) . An image was captured at each of the four phase offsets at each position of the z-galvonometer. Therefore, each image plane in the z direction of the image target included four images, with each image capturing the interference pattern generated by a corresponding phase offset of the generated beams. The four images, for a given galvanometer position, were used to determine a complex amplitude of the wavefronts at the detector 304 according to the equation

$$U(u,v) = A(u,v)\exp\big(i\phi(u,v)\big) = \frac{1}{4}\left\{\big(I_{H(u,v,0)} - I_{H(u,v,\pi)}\big) + i\big(I_{H(u,v,\pi/2)} - I_{H(u,v,3\pi/2)}\big)\right\} \text{ EQ. 3}$$

where $A(u, v)$ is an amplitude profile of the image, each term $I_H$ is an hologram image intensity for one of the four phase images, and $\phi(u, v)$ is the phase profile of the image according to

$$\emptyset(u,v) = arctan\left[\frac{I_H(u,v,0) - I_H(u,v,\pi)}{I_H\big(u,v,\pi/2\big) - I_H\big(u,v,3\pi/2\big)}\right]. \qquad \text{EQ. 4}$$

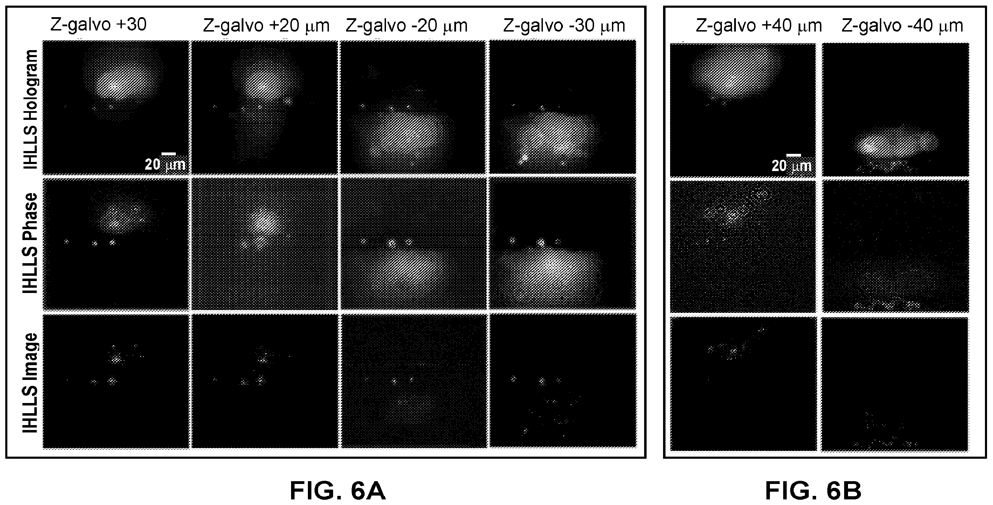

FIGS. 6A and 6B are arrays of holographic images obtained by the IHLLS 2L system of the 500 nm and 200 nm fluorescent beads, respectively. Each column of the image arrays of FIGS. 6A and 6B includes a set of images obtained at a given z-galvonometer position. A z-galvonometer position of $z_{galvo}$ = 30 $\mu$m provides an image of a top layer of beads, while a position of $z_{galvo}$ = -30 $\mu$m provides images of a bottom layer of beads, and positions of $\pm$20 $\mu$m, $\pm$10 $\mu$m, and 0 $\mu$m, provide images of beads that are equidistant between the top and bottom layers. Images of other z-galvonometer positions were obtained and are not presented in FIGS. 6A and 6B. The rows of images include a top row of IHLLS holograms detected at the camera or detector 304, a middle row of IHLLS phase images of ø as determined by EQ. 4, and a bottom row of IHLLS reconstructed images of the complex amplitude of EQ. 3. The phase images of the middle row contain depth dependent phase information derived from the IHLLS holograms of the top row of images. The complex holograms were propagated and reconstructed at a desired focal plane for increasing resolution and contrast using a custom diffraction Angular Spectrum method (ASM) routine in MATLAB (Mathworks, Inc.) to generate the bottom row of IHLLS reconstructed images. The ASM was implemented instead of a Fresnel reconstruction since the ASM can reconstruct a wave field at any distance from the hologram plane with no restriction on the propagation distance. In embodiments, the reference plane for depth scanning is taken as the plane where the position of the z-galvanometric mirror coincides with the z-piezo stage objective position, which is the middle plane of the camera FOV. The sample is in focus at this position, referred to as 'Z-galvo 0 $\mu$m'. In embodiments, other reconstruction method schemes may be implemented as a combination of ASM and Fresnel methods. The ASM may be implemented for the in-focus samples and the Fresnel implemented for reconstruction of the out-of-focus samples.

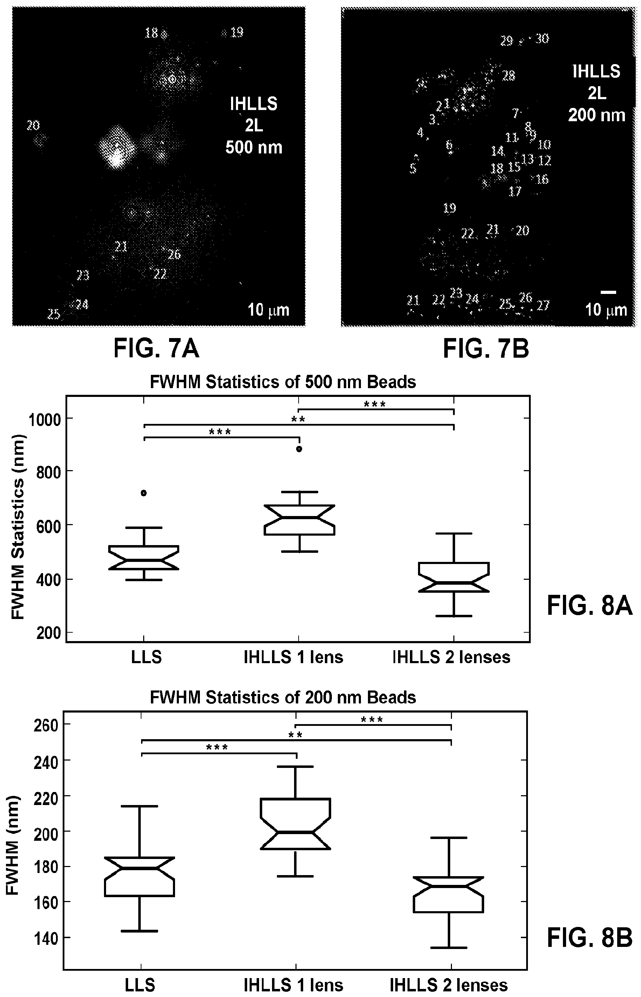

FIGS. 7A and 7B are images of the maximum composite projections of all of the reconstructed complex amplitudes at the z-galvonometer mirror positions z-galvo of 0 $\mu$m, $\pm$ 10 $\mu$m, $\pm$ 20 $\mu$m, and $\pm$ 30 $\mu$m for the 500 nm and 200 nm fluorescent beads, respectively, with high resolution and contrast. The images of FIGS. 7B include an extended scanning range of $\pm$ 40 $\mu$m.

FIGS. 8A and 8B present the transverse full-width at half-maximum (FWHM) values for images obtained by the conventional LLS, IHLLS 1L, and IHLLS 2L systems for the 500 nm beads and the 200 mm beads, respectively. A custom peak-finding routine was used to identify the locations for each bead. The peak-finding routine defined a region of interest (ROI) around each potential bead in each tomographic and holographic reconstructed image (i.e., the images of FIGS. 4a - 4D, &a, and 7B). A least square fit to a 2D Gaussian function was performed in each region of interest and the center-of-mass position and FWHM in x and y for each ROI was determined. For the images of the 200 nm beads, conventional LLS had a FWHM of 178 nm, IHLLS 1L had a FWHM value of 203 nm, and the IHLLS 2L system had a FWHM value of 165 nm. The calculations for the 500 nm beads show an LLS FWHM of 486 nm, IHLLS 1L FWHM of 631 nm, and a IHLLS 2L FWHM of 395 nm. The FWHM values of the IHLLS 1L and IHLLS 2L systems are a factor of 1.03 to 1.2 times smaller than in LLS. With a * p-value ≤ 0.05, ** p-value ≤ 0.01, and *** p-value ≤ 0.001, where p-value ≤ 0.05 is a statistically significant difference and p-value > 0.05 is not statistically significant difference.

The disclosed system and method for performing IHLLS may be useful for imaging of sensitive materials such as biological samples and tissues. For example, imaging of neuronal cells may provide the foundation for understanding many diseases in the human brain. Understanding and analyzing the physiological behavior of the neuronal cells requires the ability to observe cell structure and dynamics quantitatively to cellular and subcellular levels. The described IHLLS imaging system and method provides a noninvasive contrast imaging technique that uses low intensity radiation, which preserves the integrity of the cell. Further, neuronal cells are 3D structures that extend throughout tissue in all directions and many conventional microscopy methods are unable to resolve the cellular structures into 3D images. Conventional approaches are unable to image in the millisecond temporal range at multiple depths simultaneously. The disclosed IHLLS system allows for the 3D holographic imaging of neurons and other cells at imaging speeds capable of capturing physiological responses and cellular dynamics.

As an example, neuronal cells could respond electrically to chemical and electrical inputs. The electrical response could rapidly spread throughout the neuronal cell structure. The electrical response rapidly spreads throughout the neuronal cell structure. The electrical activity in the neuronal cell causes a change in the refractive index of the cell, which, can be imaged over time by the disclosed IHLLS imaging techniques. To demonstrate the observation of cellular behavior, an IHLLS system was constructed to image biological samples.

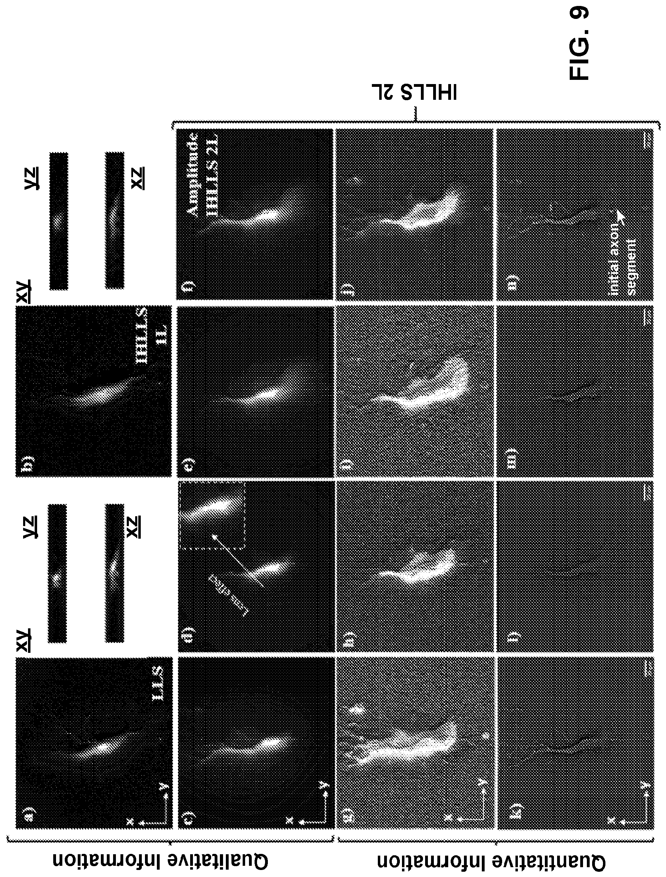

Quantitative phase cell imaging was performed using an IHLLS 2L system according to the description of the IHLLS 2L system above. The target to be imaged was a lamprey spinal cord ventral horn neuron with dendrites that were sufficiently large to cover the whole detector FOV of 208x208 $\mu m^2$. Images of the target neuron were obtained using the conventional LLS system, the IHLLS 1L system, and the IHLLS 2L system. FIG. 9 is an array of images of the target neuronal cell obtained by each of the conventional LLS, IHLLS 1L, and IHLLS 2L systems.

FIGS. 9a and 9b are tomographic images obtained by using conventional LLS and IHLLS 1L, respectively. The conventional LLS system had maximum transverse imaging area of $78 \times 78$ $\mu m^2$, and therefore, features of the target cannot be resolved outside of that area. Each of the images of FIGS. 9A and 9B was obtained using a z-galvonometer and z-piezo stage objective that were positioned across a range of 60 $\mu m$ over 300 steps. Deconvolution sharpening of the raw data was performed to reduce blur and enhance fine details of the images of FIGS. 9a and 9b. FIGS. 9c - 9f are images obtained by the IHLLS 2L system for the max projection of three reconstructed amplitude images from IHLLS holograms recorded at $z_{galvo}$ = 30 $\mu m$, 0 $\mu m$, and -30 $\mu m$. The reconstructed holographic images of FIGS. 9c - 9f provide similar image quality as the LLS image of FIG. 9a, with the IHLLS 2L images resolving a larger imaging area of the target or sample (i.e., the neuronal cell). FIGS. 9g - 9j provide quantitative phase information that is unable to be obtained by the conventional LLS system. The phase images of FIGS. 9g - 9j are important for understanding the physiology and pathophysiology of various cells, tissues, and other types of biological samples. FIGS. 9k - 9n are images of the phase information after a bandpass filter has been applied to the phase information. The bandpass filter applied in FIGS. 9k - 9n allows for the attenuation of certain spatial frequencies in the images to accentuate specific features of the cell to be observed and further studied.

The use of IHLLS 2L, as described herein, enables the possibility of measuring changes in cell membrane potential with imaging resolution across the complex 3D structure of the neuron. Organelle and protein movement within cells changes the local refractive index which can be observed in real time on a time scale of seconds, hours, or days at an exposure time and laser intensity two times the amount of conventional LLS. Therefore, IHLLS 2L allows for the observation and detection of movements related to structural changes, axonal transport, and vesicle recycling. The use of IHLLS to detect and image electrical or structural changes of phase opens many new possibilities in imaging of neuronal and cellular activity. While measuring the biological function of neuronal tissues is one example, the IHLLS methods and system disclosed may be used in a number of industries and applications for measuring samples that require low illumination intensities and fast image capture times to observe behaviors of the sample, without damaging or affecting the sample. For example, the disclose IHLLS method and system may be beneficial for measuring chemical reactions, weakly bonded materials, electrically active materials, refractive index changes, The optical and mechanical design of the IHLLS system expands the applicability of the LLS, and other microscopy systems, and could open entirely new imaging modalities in all light sheet imaging instruments. The incoherent configuration could be added as an accessory or as an add-on feature to any existing system that provides galvanometer mirror beam scanning (e.g., Bessel and/or Gaussian beams.)

**Claims**

1. A microscopy system comprising:

   a light sheet microscope (301, 162) configured to provide radiation (153), the radiation (152) having a (i) phase, (ii) amplitude), and (iii) Poynting vector, the Poynting vector having a direction indicative of a direction of propagation of the radiation;
   a modulator (102, 302) disposed along the direction of the Poynting vector, the modulator (102, 302) configured to modulate a phase of the radiation to generate a plurality of beams (110);
   a detector module (104) disposed along the direction of the Poynting vector, the detector module (104) configured to detect, at a detector plane of the detector module, the plurality of beams, the detector module (104) further configured to generate a signal indicative of an interference pattern of the plurality of beams; and
   a processor (120) communicative coupled to the detector module (104), the processor (120) configured to receive the signal indicative of the interference pattern, and further configured to generate a holographic image from the signal.

2. A microscopy system according to claim 1, wherein the modulator (102, 302) comprises a spatial light modulator (SLM).

3. A microscopy system according to claim 1, wherein the plurality of beams (110) comprises two beams having a phase offset from each other of 0°, 90°, 180°, or 270°.

4. A microscopy system according to claim 1, wherein the radiation (153) comprises a Bessel beam.

5. A microscopy system according to claim 1, wherein the modulator (102, 302) is further configured to correct for aberrations and phase distortions of the radiation due to optical elements by modulating the phase of the radiation.

6. A microscopy system according to claim 1, wherein to modulate the phase of the radiation (153) to generate a plurality of beams (110), the modulator (102, 302) is configured to:
   modulate the radiation to form a time-series of four beam pairs, wherein each beam pair of the time-series of four beam pairs includes two spatiotemporally overlapped beams, with the first beam pair having a phase offset of 0°, the second beam pair having a phase offset of 90°, the third beam pair having a phase offset of 180°, and the fourth beam pair having a phase offset of 270°.

7. A microscopy system according to claim 1, wherein to generate a holographic image, the processor (120) is further configured to:

   determine, from the signal indicative of the interference pattern, a complex amplitude of the interference pattern of the plurality of beams;
   reconstruct three-dimensional information from the complex amplitude of the interference pattern; and
   generate a holographic image from the three-dimensional information.

8. A microscopy system according to claim 1, wherein the radiation (153) comprises incoherent radiation.

9. A microscopy system according to claim 1, further comprising a wavelength filter (117) disposed along the direction of the Poynting vector, the wavelength filter (117) configured to filter the radiation to attenuate a band of wavelengths of the radiation.

10. A microscopy system according to claim 1, further comprising a polarizer (118) disposed along the direction of the Poynting vector, the polarizer (118) configured to polarize the radiation to filter out polarizations of the radiation.

11. A microscopy system according to claim 1, the light sheet microscope comprising:

    a radiation source (152) configured to provide radiation (152) to a sample (160), to perform imaging of the sample (160); and
    a microscope objective (162) positioned at a first distance from the sample (160), the microscope objective (162) configured to collect the radiation from the sample (160), the microscope objective (162) further being operatively coupled to the modulator (102) to provide the radiation to the modulator (102).

12. A microscopy system according to claim 11, further comprising:
a z-galvanometric mirror configured to provide images across a scanning range.

13. A microscopy system according to claim 1, wherein the modulator (102) is configured to modulate the radiation according to two diffractive lenses superimposed on an active area of the modulator.

14. A method for performing holographic microscopy, the method comprising:

providing, from a light sheet microscope to a modulator, radiation having a (i) phase, (ii) amplitude), and (iii) Poynting vector;
modulating, by the modulator, the phase of the radiation to generate a plurality of beams;
detecting, at a detection plane of a detector module, the plurality of beams;
generating, by the detector module, a signal indicative of an interference pattern of the plurality of beams; and
generating, by a processor, a holographic image from the signal indicative of the interference pattern.

**Patentansprüche**

1. Mikroskopiesystem, umfassend:

ein Lichtscheibenmikroskop (301, 162), das dafür ausgelegt ist, Strahlung (153) bereitzustellen, wobei die Strahlung (152) i) eine Phase, ii) eine Amplitude und iii) einen Poynting-Vektor aufweist, wobei der Poynting-Vektor eine Richtung hat, welche eine Richtung der Ausbreitung der Strahlung anzeigt;
einen Modulator (102, 302), der entlang der Richtung des Poynting-Vektors angeordnet ist, wobei der Modulator (102, 302) dafür ausgelegt ist, eine Phase der Strahlung zu modulieren, um eine Mehrzahl an Strahlen (110) zu erzeugen;
ein Detektormodul (104), das entlang der Richtung des Poynting-Vektors angeordnet ist, wobei das Detektormodul (104) dafür ausgelegt ist, auf einer Detektorebene des Detektormoduls die Mehrzahl an Strahlen zu erfassen, wobei das Detektormodul (104) weiterhin dafür ausgelegt ist, ein Signal zu erzeugen, das ein Interferenzmuster der Mehrzahl an Strahlen anzeigt; und
einen Prozessor (120), der auf kommunizierende Weise an das Detektormodul (104) gekoppelt ist, wobei der Prozessor (120) weiterhin dafür ausgelegt ist, das Signal zu empfangen, welches das Interferenzmuster anzeigt, und weiterhin dafür ausgelegt ist, ausgehend von dem Signal ein holografisches Bild zu erzeugen.

2. Mikroskopiesystem gemäß Anspruch 1, wobei der Modulator (102, 302) einen räumlichen Modulator für Licht (SLM) umfasst.

3. Mikroskopiesystem gemäß Anspruch 1, wobei die Mehrzahl an Strahlen (110) zwei Strahlen umfasst, die eine Phasenverschiebung von 0°, 90°, 180° oder 270° zueinander aufweisen.

4. Mikroskopiesystem gemäß Anspruch 1, wobei die Strahlung (153) einen Bessel-Strahl umfasst.

5. Mikroskopiesystem gemäß Anspruch 1, wobei der Modulator (102, 302) weiterhin dafür ausgelegt ist, Abbildungsfehler und Phasenverzerrungen der Strahlung, die auf optische Elemente zurückzuführen sind, durch Modulation der Phase der Strahlung zu korrigieren.

6. Mikroskopiesystem nach Anspruch 1, wobei der Modulator (102, 302), um die Phase der Strahlung (153) zwecks Erzeugung einer Mehrzahl an Strahlen (110) zu modulieren, dafür ausgelegt ist:
die Strahlung zu modulieren, um eine Zeitreihe von vier Strahlenpaaren zu bilden, wobei jedes Strahlenpaar der Zeitreihe von vier Strahlenpaaren zwei raumzeitlich überlappende Strahlen beinhaltet, wobei das erste Strahlenpaar eine Phasenverschiebung von 0° aufweist, das zweite Strahlenpaar eine Phasenverschiebung von 90° aufweist, das dritte Strahlenpaar eine Phasenverschiebung von 180° aufweist und das vierte Strahlenpaar eine Phasenverschiebung von 270° aufweist.

7. Mikroskopiesystem gemäß Anspruch 1, wobei der Prozessor (120) zur Erzeugung eines holografischen Bildes weiterhin dafür ausgelegt ist:

ausgehend von dem Signal, welches das Interferenzmuster anzeigt, eine komplexe Amplitude des Interferenzmusters der Mehrzahl an Strahlen zu bestimmen;
ausgehend von der komplexen Amplitude des Interferenzmusters dreidimensionale Informationen zu rekonstruieren; und
ausgehend von den dreidimensionalen Informationen ein holografisches Bild zu erzeugen.

8. Mikroskopiesystem gemäß Anspruch 1, wobei die Strahlung (153) inkohärente Strahlung umfasst.

9. Mikroskopiesystem gemäß Anspruch 1, das ferner einen Wellenlängenfilter (117) aufweist, der entlang der Richtung des Poynting-Vektors angeordnet ist, wobei der Wellenlängenfilter (117) dafür ausgelegt ist, die Strahlung derart zu filtern, dass ein Wellenlängenband der Strahlung abgeschwächt wird.

10. Mikroskopiesystem gemäß Anspruch 1, das ferner einen Polarisator (118) umfasst, der entlang der Richtung des Poynting-Vektors angeordnet ist, wobei der Polarisator (118) dafür ausgelegt ist, die Strahlung derart zu polarisieren, dass Polarisationen der Strahlung herausgefiltert werden.

11. Mikroskopiesystem gemäß Anspruch 1, wobei das Lichtscheibenmikroskop Folgendes umfasst:

eine Strahlungsquelle (152), die dafür ausgelegt ist, einer Probe (160) zwecks Durchführung der Bildgebung der Probe (160) Strahlung (152) zuzuführen; und
ein Mikroskopobjektiv (162), das in einem ersten Abstand von der Probe (160) angeordnet ist, wobei das Mikroskopobjektiv (162) dafür ausgelegt ist, die Strahlung aus der Probe (160) zu sammeln, wobei das Mikroskopobjektiv (162) weiterhin betrieblich an den Modulator (102) gekoppelt ist, um die Strahlung dem Modulator (102) zuzuführen.

12. Mikroskopiesystem gemäß Anspruch 11, weiterhin umfassend:
einen z-galvanometrischen Spiegel, der dafür ausgelegt ist, Bilder über einen Scanbereich hinweg bereitzustellen.

13. Mikroskopiesystem gemäß Anspruch 1, wobei der Modulator (102) dafür ausgelegt ist, die Strahlung anhand von zwei Streulinsen zu modulieren, die einem aktiven Bereich des Modulators überlagert sind.

14. Verfahren zur Durchführung holographischer Mikroskopie, wobei das Verfahren Folgendes umfasst:

Bereitstellen, ausgehend von einem Lichtscheibenmikroskop, von Strahlung mit i) einer Phase, ii) einer Amplitude und iii) einem Poynting-Vektor, sodass diese zu einem Modulator gelangt;
Modulieren der Phase der Strahlung durch den Modulator, um eine Mehrzahl an Strahlen zu erzeugen;
Erfassen, auf einer Detektionsebene eines Detektormoduls, der Mehrzahl der Strahlen;
Erzeugen, durch das Detektormodul, eines Signals, das ein Interferenzmuster der Mehrzahl an Strahlen anzeigt; und
Erzeugen, mittels eines Prozessors, eines holografischen Bildes ausgehend von dem Signal, welches das Interferenzmuster anzeigt.

**Revendications**

1. Système de microscopie, comprenant :

un microscope à feuille de lumière (301, 162) configuré pour fournir un rayonnement (153), le rayonnement (152) présentant une (i) phase, (ii) une amplitude), et (iii) un vecteur de Poynting, le vecteur de Poynting présentant une direction indicative d'une direction de propagation du rayonnement ;
un modulateur (102, 302) disposé le long de la direction du vecteur de Poynting, le modulateur (102, 302) étant configuré pour moduler une phase du rayonnement afin de générer une pluralité de faisceaux (110) ;
un module de détecteur (104) disposé le long de la direction du vecteur de Poynting, le module de détecteur (104) étant configuré pour détecter, au niveau d'un plan de détecteur du module de détecteur, la pluralité de faisceaux, le module de détecteur (104) étant en outre configuré pour générer un signal indiquant un motif d'interférence de la pluralité de faisceaux ; et

un processeur (120) couplé en communication au module détecteur (104), le processeur (120) étant configuré pour recevoir le signal indicatif du motif d'interférence, et étant en outre configuré pour générer une image holographique à partir du signal.

**2.** Système de microscopie selon la revendication 1, dans lequel le modulateur (102, 302) comprend un modulateur de lumière spatial (SLM).

**3.** Système de microscopie selon la revendication 1, dans lequel la pluralité de faisceaux (110) comprend deux faisceaux présentant un décalage de phase l'un par rapport à l'autre de 0°, 90°, 180° ou 270°.

**4.** Système de microscopie selon la revendication 1, dans lequel le rayonnement (153) comprend un faisceau de Bessel.

**5.** Système de microscopie selon la revendication 1, dans lequel le modulateur (102, 302) est en outre configuré pour corriger des aberrations et des distorsions de phase du rayonnement dues aux éléments optiques en modulant la phase du rayonnement.

**6.** Système de microscopie selon la revendication 1, dans lequel pour moduler la phase du rayonnement (153) afin de générer une pluralité de faisceaux (110), le modulateur (102, 302) est configuré pour :
moduler le rayonnement afin de former une série temporelle de quatre paires de faisceaux, dans lequel chaque paire de faisceaux de la série temporelle de quatre paires de faisceaux inclut deux faisceaux à chevauchement spatio-temporel, la première paire de faisceaux présentant un décalage de phase de 0°, la deuxième paire de faisceaux présentant un décalage de phase de 90°, la troisième paire de faisceaux présentant un décalage de phase de 180°, et la quatrième paire de faisceaux présentant un décalage de phase de 270°.

**7.** Système de microscopie selon la revendication 1, dans lequel pour générer une image holographique, le processeur (120) est en outre configuré pour :

déterminer, à partir du signal indicatif du motif d'interférence, une amplitude complexe du motif d'interférence de la pluralité de faisceaux ;
reconstruire des informations tridimensionnelles à partir de l'amplitude complexe du motif d'interférence ; et
générer une image holographique à partir des informations tridimensionnelles.

**8.** Système de microscopie selon la revendication 1, dans lequel le rayonnement (153) comprend un rayonnement incohérent.

**9.** Système de microscopie selon la revendication 1, comprenant en outre un filtre de longueur d'onde (117) disposé le long de la direction du vecteur de Poynting, le filtre de longueur d'onde (117) étant configuré pour filtrer le rayonnement afin d'atténuer une bande de longueurs d'onde du rayonnement.

**10.** Système de microscopie selon la revendication 1, comprenant en outre un polariseur (118) disposé le long de la direction du vecteur de Poynting, le polariseur (118) étant configuré pour polariser le rayonnement afin de filtrer des polarisations du rayonnement.

**11.** Système de microscopie selon la revendication 1, le microscope à feuille de lumière comprenant :

une source de rayonnement (152) configurée pour fournir un rayonnement (152) à un échantillon (160) afin d'effectuer une imagerie de l'échantillon (160) ; et
un objectif de microscope (162) positionné à une première distance de l'échantillon (160), l'objectif de microscope (162) étant configuré pour collecter le rayonnement à partir de l'échantillon (160), l'objectif de microscope (162) étant en outre couplé de manière opérationnelle au modulateur (102) pour fournir le rayonnement au modulateur (102).

**12.** Système de microscopie selon la revendication 11, comprenant en outre :
un miroir z-galvanométrique configuré pour fournir des images sur une plage de balayage.

**13.** Système de microscopie selon la revendication 1, dans lequel le modulateur (102) est configuré pour moduler le rayonnement selon deux lentilles de diffraction superposées sur une zone active du modulateur.

**14.** Procédé pour effectuer une microscopie holographique, le procédé comprenant les étapes consistant à :

fournir, depuis un microscope à feuille de lumière vers un modulateur, un rayonnement présentant une (i) phase, (ii) une amplitude), et (iii) un vecteur de Poynting ;

moduler, par l'intermédiaire du modulateur, la phase du rayonnement pour générer une pluralité de faisceaux ;

détecter, au niveau d'un plan de détection d'un module de détection, la pluralité de faisceaux ;

générer, par l'intermédiaire du module de détection, un signal indicatif d'un motif d'interférence de la pluralité de faisceaux ; et

générer, par l'intermédiaire d'un processeur, une image holographique à partir du signal indicatif du motif d'interférence.

**FIG. 1**

EP 4 100 796 B1

200

PROVIDE RADIATION TO MODULATOR ——202

↓

MODULATE RADIATION TO GENERATE
PLURALITY OF BEAMS ——204

↓

DETECT PLURALITY OF BEAMS AND/
OR INTERFERENCE PATTERN ——206

↓

GENERATE SIGNAL INDICATIVE OF
DETECTED BEAMS AND/OR
DETECTED INTERFERENCE PATTERN ——208

↓

GENERATE HOLOGRAPHIC IMAGE ——210

# FIG. 2

**FIG. 3A**

**FIG. 3B**

**FIG. 3C**

FIG. 4A

FIG. 4B

FIG. 4C

FIG. 4D

LLS

IHLLS 1L

z-galvo
position

↓

30 μm
↔

20 μm
↔

10 μm
↔

0 μm
↔

-10 μm
↔

-20 μm
↔

-30 μm
↔

FIG. 5A

FIG. 5B

FIG. 5C

FIG. 5D

z-galvo position

40 μm
30 μm
20 μm
10 μm
0 μm
-10 μm
-20 μm
-30 μm
-40 μm

FIG. 6B

FIG. 6A

FIG. 7A

FIG. 7B

FIG. 8A

FIG. 8B

Quantitative Information      Qualitative Information

IHLLS 2L

FIG. 9